# EUROPEAN PATENT SPECIFICATION

(11) **EP 3 868 197 B1**
(45) Date of publication and mention of the grant of the patent: **11.05.2022**
(21) Application number: 19907426.1
(22) Date of filing: 16.08.2019
(51) Int. Cl.: A01G 9/16, A01G 9/02, A01G 9/24, A01G 31/02

(54) **PLANTING BOX WITHOUT NEED FOR CONSTRUCTION**
PFLANZKASTEN OHNE KONSTRUKTIONSBEDARF
BOÎTE DE PLANTATION NE NÉCESSITANT PAS DE CONSTRUCTION

(30) Priority: 04.01.2019 CN 201910007934
(43) Date of publication of application: 25.08.2021
(73) Proprietor: Fujian Sanan Sino-Science Photobiotech Co., Ltd., Quanzhou, Fujian 362411 (CN)
(72) Inventor: LI, Zhiyin, Quanzhou, Fujian 362411 (CN); WANG, Yayuan, Quanzhou, Fujian 362411 (CN); ZHAN, Zhuo, Quanzhou, Fujian 362411 (CN)
(74) Representative: Petculescu, Ana-Maria
(86) International application number: PCT/CN2019/100933
(87) International publication number: WO 2020/140438

(56) References cited:
- WO-A1-2012/050067
- WO-A1-2018/050816
- WO-A1-2018/226256
- US-A1- 2014 208 642
- US-A1- 2018 237 221

## Description

### BACKGROUND

### Technical Field

The present invention relates to the field of plant factories, and specifically relates to an erection-free planting case.

### Related Art

A plant factory is an advanced stage of development of modern facility agriculture. It is a high-input, high-tech, and well-equipped production system that integrates biotechnology, engineering technology and system management and represents the future development direction of agriculture.

Since the development of the plant factory in 1957, high-cost input is the most significant reason that affects the promotion of the plant factory, and the input-output ratio is low. The cost input of the plant factory mainly includes the early construction cost and the later operation cost. A large part of the early construction cost is invested in air conditioning equipment system and equipment construction; high later operation cost is mainly caused by the fact that a high-temperature environment in a factory due to a large area of lamp illumination needs to be constantly cooled by large-scale air conditioning equipment, which leads to high power consumption of later operation of the plant factory and high operation cost. Planting equipment of an existing plant factory mainly includes pipeline planting, shelf planting and modular planting. These three forms have the problems of cumbersome erection of planting equipment, low light utilization efficiency and high cost, and once it is erected, the equipment is difficult to change or move, resulting in difficulty in maintenance in case of a fault. The low input-output ratio and the high-cost input have been explained above. Low output is because that an existing cooling technology is to use an air conditioner to cool a large-area factory. Therefore, the planting equipment cannot be densely stacked, resulting in the low input-output ratio. WO2018/050816 discloses a growing system where plants are grown in containers and the containers are stored in stacks. Above the stacks runs a grid network of tracks on which load handling devices run. The load handling devices take containers from the stacks and deposit then at alternative locations in the stacks or deposit them at stations where goods may be picked out. The containers may be provided with one or more of the following services: power, power control, heating, lighting, cooling, sensing means, data logging means, growing means, water and nutrients. The system further comprises deployable lighting means capable of lighting each container from above when in use..

WO2012/050067 discloses a plant growing apparatus comprising a light source for irradiating light to a plant to be grown, and a cooling unit for the light source, wherein the light source is provided on a surface and the other side of the surface is provided with a cooling plate, and the cooling plates are disposed in such a manner as to come into direct contact so as to enable thermal conduction, and the inside of the cooling plate is equipped with multiple thin metal plates in such a manner that a predetermined gas is able to flow from a first direction to a second direction.

US2014208642 discloses s grow box made from a box or cooler with a light enclosure and ventilation ducts for temperature regulation and circulation of air, and a timer for control of the light source.

US2018237221 discloses a storage system comprising a first set of parallel rails or tracks and a second set of parallel rails or tracks extending transverse to the first set in a substantially horizontal plane to form a grid pattern having a plurality of grid spaces; and a plurality of storage containers arranged in stacks, located beneath the rails and at least one load handling device disposed on the grid, arranged to move laterally above the stacks on the rails, the load handling device having a lifting device arranged to lift one or more containers, or parts thereof, from a stack. A number of the containers include service means for providing services to the or each container, thereby enabling individual containers within the stacks to perform additional functions.

WO2018/226256 discloses a greenhouse hydro-cooled grow light LED system that administers a mist or vapor. This system operates in a range of temperatures, which are determined by the liquid temperature running through the channeled copper heatsink.

In summary, the current plant factory is low in input-output ratio, cumbersome in planting equipment erection, low in light utilization efficiency, high in cost, difficult in maintenance and low in space utilization rate. The present invention provides an erection-free planting case. Compared with the existing plant factory, the present invention can greatly reduce the plant factory construction cost and operation cost, has low space configuration requirements, high operability, simple operation and no installation, is labor saving, can be densely stacked, reduces the investment on air conditioning systems, and can more accurately control the growth temperature of plants.

### SUMMARY

In order to solve the above-mentioned technical problems, it is necessary to provide an erection-free planting case to reduce the plant factory construction cost and operation cost, lower the space configuration requirements and reduce the investment on air conditioning systems. In order to achieve the above-mentioned objective, the present invention provides an erection-free planting case, which includes at least one planting box. Each planting box is provided with a box body and a box cover; a light source module is arranged on the box cover; a heat dissipation module is arranged on the box cover or the box body; the bottom of the box body is provided with a connection port; the top of the box cover is provided with a connection portion; the connection portion at the top of the box cover matches the connection port at the bottom of the box body to realize stacked and nested connection between upper and lower layers of planting boxes; and the light source module and the heat dissipation module are arranged in a cavity formed inside each box cover; the light source module comprises a plurality of lamp tubes arranged in the cavity and the heat dissipation module comprises heat dissipation passages arranged between the lamp tubes at intervals, heat dissipation fans and heat dissipation fins heat dissipation passages are respectively connected to the heat dissipation fins and communicate with the outside through heat dissipation passage inlet and outlet in a cavity wall; a coolant flows in the heat dissipation passages; the coolant enters through the inlet into the cavity via the heat dissipation passages, then absorbs heat in the cavity, and is discharged from the outlet.

Further, the plurality of lamp tubes are detachably arranged in the cavity in parallel; the heat dissipation fins are uniformly arranged between two lamp tubes, and are perpendicular to the direction of the two lamp tubes; and the heat dissipation fans are arranged among the heat dissipation fins.

Further, a condensed water collector is arranged between the box cover and the box body, and communicates with the heat dissipation passages.

Further, the connection portion at the top of the box cover is a flexible glue conical connection plug, and the connection port at the bottom of the box body is a conical connection port. The flexible glue conical connection plug matches the conical connection port to achieve a sealing effect, so as to realize connection of the heat dissipation passages between the planting boxes and reduce the operation complexity in one-by-one connection of the heat dissipation passages.

Further, the heat dissipation module is arranged on a side surface of an inner wall of the box body, and includes a heat dissipation main body; the top of the heat dissipation main body is provided with a heat dissipation fan; the side surfaces of the heat dissipation main body are respectively provided with a cooling fluid inlet and a cooling fluid outlet; the heat dissipation main body further includes a plurality of heat dissipation fins; the heat dissipation fins are located at an air outlet of the fan; and the bottom of the heat dissipation main body is further connected with a condensed water collector.

Further, a side surface of the box body is provided with an observation window.

Further, the top of the box body is provided with an L-shaped sliding chute.

Further, the box body is fully closed, of a water trough type or hollowed.

Compared with the prior art, the above technical solution has the following advantages:
1. The equipment of the present invention is easy to assemble; and the erection-free planting case is realized in a manner of stacking case bodies, so that the planting equipment cost is reduced, the space configuration cost is low, the operability is high, and the operation is simple.
2. A lamp body of the present invention is disposed in the light-proof planting box, so that the light utilization rate is increased, and the light loss is reduced.
3. The present invention designs an independent cooling system, so that the investment on air conditioning systems can be reduced. Compared with air conditioner cooling, the independent cooling system has better balance and higher stability, and can more accurately control the growth temperature of plants.
4. The erection-free planting case of the present invention has high space utilization rate and is easy to repair.
5. By the design of the condensed water collection device of the present invention, cyclic use of condensed water can be realized, and an effect of saving water is achieved.
6. The present invention can realize connection between CO₂ supplementation pipelines and cooling system pipelines between the planting boxes, which reduces the complexity of one-by-one connection operation; and a CO₂ supplementation system shortens the growth cycle of plants, so that the yield is effectively increased, and the income is increased.
7. The design of a closed system of the present invention realizes watering-free and unattended functions for plants, realizes a fully-automatic unattended workshop and reduces the labor cost.

### BRIEF DESCRIPTION OF THE DRAWINGS

FIG. 1 is a stereogram of a single planting box of an erection-free planting case of Embodiment 1;
FIG. 2 is a stereogram of a planting group after the planting boxes of Embodiment 1 are stacked;
FIG. 3 is a schematic diagram of a heat dissipation module on a planting box body of Embodiment 1;
FIG. 4 is a schematic diagram of an internal structure of the planting box body of Embodiment 1;
FIG. 5 is a schematic connection diagram of heat dissipation passages in the planting box body of Embodiment 1;
FIG. 6 is a partially enlarged diagram of part A in the schematic connection diagram of the heat dissipation passages;
FIG. 7 is a partially enlarged diagram of part B in the schematic connection diagram of the heat dissipation passages;
FIG. 8 is a schematic structural diagram of the top of the planting box body of Embodiment 1;
FIG. 9 is an enlarged diagram of an L-shaped sliding chute of Embodiment 1;
FIG. 10 is a diagram of a fully-closed planting box body of Embodiment 1;
FIG. 11 is a diagram of a water trough type planting box body of Embodiment 2;
FIG. 12 is a diagram of a hollowed planting box body of Embodiment 3;
FIG. 13 is a schematic diagram of an internal structure of Embodiment 4; and
FIG. 14 is a schematic structural diagram of a heat dissipation module of Embodiment 4.

Numerals in the drawings: 1: box cover; 2: observation window; 3: planting box body; 4: stacked structure; 5: heat dissipation fin; 6: heat dissipation fan; 7: multiple columns of internal disposed heat dissipation passages; 8: light source module; 9: heat dissipation passage inlet; 10: heat dissipation passage outlet; 11: condensed water collector; 12: CO2 inlet passage; 13: heat dissipation module; 14: heat dissipation cavity; 15: semi-transparent film; 16: flexible glue conical connection portion; 17: conical connection port; 18: L-shaped sliding chute; 19: bevel grasping position; 20: flange stopper; 21: illumination cavity; 22: cooling fluid inlet; 23: cooling fluid outlet; 24: heat dissipation fin; and 25: heat dissipation module.

### DETAILED DESCRIPTION

In order to explain the technical contents, structural features, achieved objectives and effects of the technical solutions, detailed description will be made below in combination with specific embodiments and accompanying drawings.

### Embodiment 1

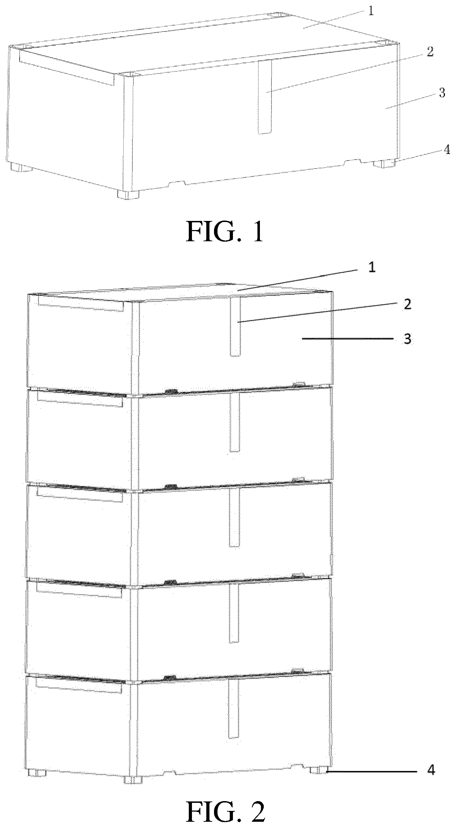

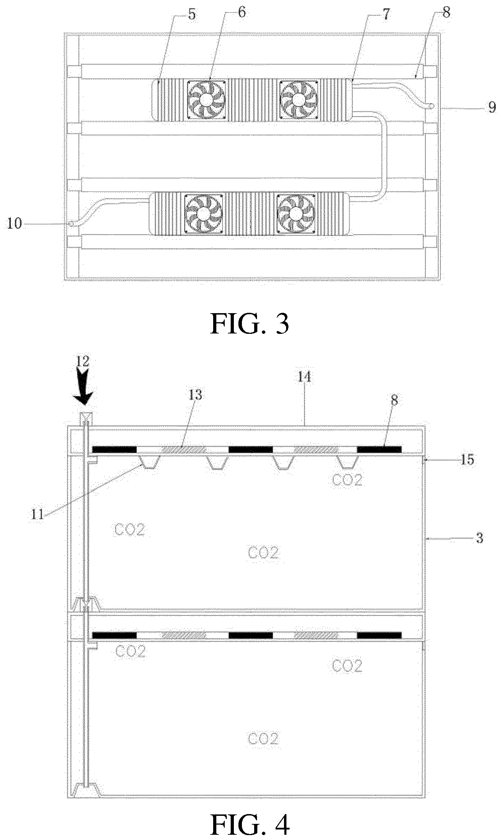

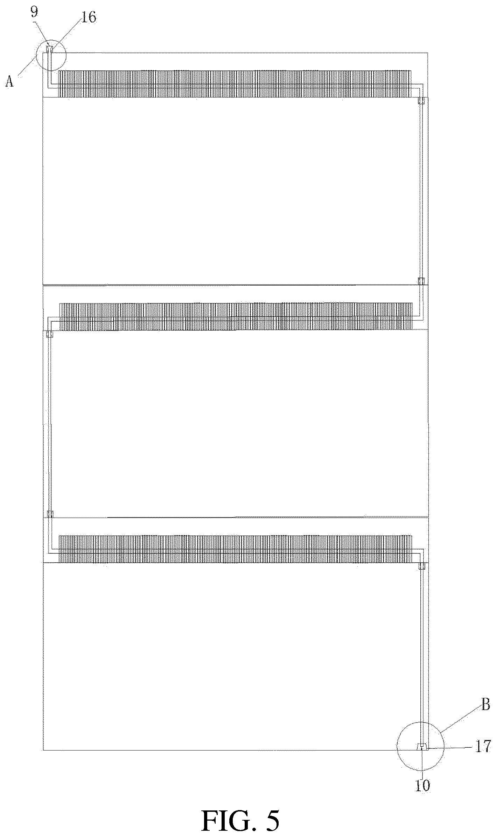

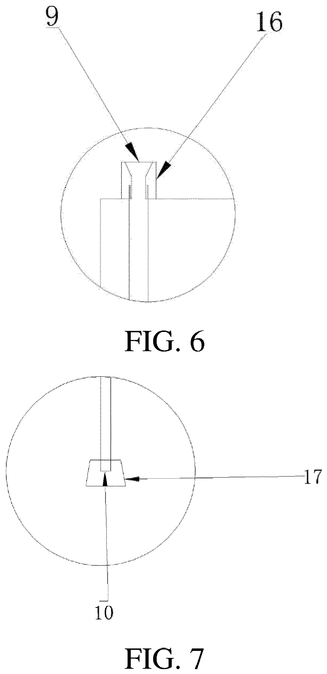

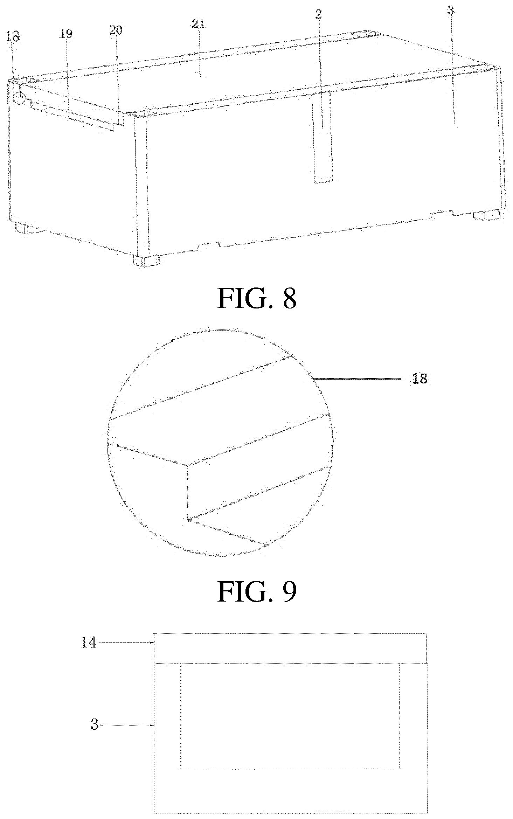

Referring to FIG. 1 to FIG. 10, the present embodiment is applied to the field of plant factories. An erection-free planting case is provided; a planting box body is fully closed, and is applicable to planting of medicinal materials. The planting case includes at least one planting box. Each planting box is provided with a planting box body 3 and a box cover 1; a cavity, in which a light source module 8 and a heat dissipation module 13 are disposed, is formed inside the box cover 1; the light source module 8 includes a plurality of lamp tubes detachably arranged in an illumination cavity 21 in parallel; the heat dissipation module 13 includes heat dissipation passages 7 arranged between the lamp tubes, heat dissipation fans 6 and heat dissipation fins 5; the heat dissipation passages 7 are respectively connected to the heat dissipation fins 5 and communicate to the outside through a heat dissipation passage inlet 9 and a heat dissipation passage outlet 10 on a cavity wall; a coolant flows in the heat dissipation passages; the coolant enters a heat dissipation cavity 14 via the heat dissipation passage inlet 9, then absorbs heat in the cavity, and is discharged from the heat dissipation passage outlet 10; the heat dissipation fins 5 are uniformly arranged between two lamp tubes and are perpendicular to the direction of the lamp tubes; and the heat dissipation fans 6 are arranged among the heat dissipation fins 5.

The bottom of the box body is provided with a conical connection port 17, and the top is provided with a flexible glue conical connection portion 16; and the conical connection portion 16 at the top of the box cover matches the conical connection port 17, so that the upper and lower layers of planting boxes can be connected in a stacked and nested manner. A condensed water collector 11 communicating with the heat dissipation passages is arranged between the box cover 1 and the box body 3; and a side surface of the box body is provided with an observation window 2. Through this window, the growth of a plant can be observed. The top of the box body is provided with an L-shaped sliding chute 18; and the illumination cavity is fixed at the top of the planting box body through the L-shaped sliding chute 18. A single planting box can be put into use for planting after being powered on, or the planting boxes can be stacked to form a planting group to realize factory planting.

### Embodiment 2

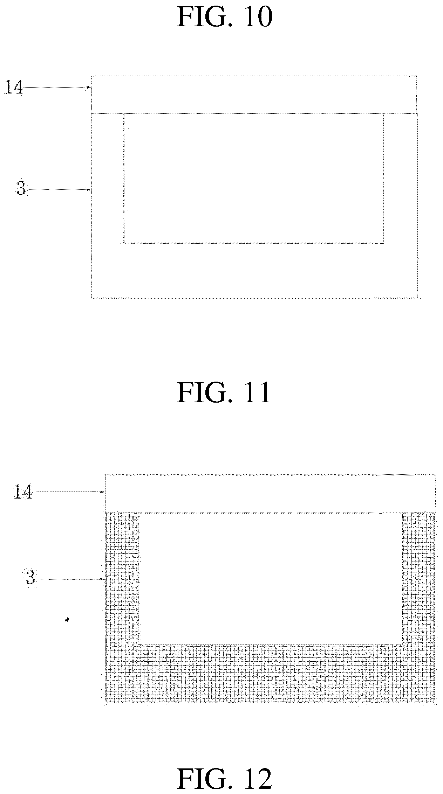

Referring to FIG. 11, the present embodiment is applied to the field of plant factories. An erection-free planting case is provided; a planting box body is of a water trough type, and is applicable to hydroponics of large vegetables and seedlings. The planting case includes at least one planting box. Each planting box is provided with a planting box body 3 and a box cover; a cavity, in which a light source module and a heat dissipation module are disposed, is formed inside the box cover; the light source module includes a plurality of lamp tubes detachably arranged in an illumination cavity in parallel; the heat dissipation module includes heat dissipation passages arranged between the lamp tubes, heat dissipation fans and heat dissipation fins; the heat dissipation passages are respectively connected to the heat dissipation fins and communicate to the outside through a heat dissipation passage inlet and a heat dissipation passage outlet on a cavity wall; a coolant flows in the heat dissipation passages; the coolant enters a heat dissipation cavity 14 via the heat dissipation passage inlet, then absorbs heat in the cavity, and is discharged from the heat dissipation outlet; the heat dissipation fins are uniformly arranged between two lamp tubes and are perpendicular to the direction of the lamp tubes; and the heat dissipation fans are arranged among the heat dissipation fins.

The bottom of the box body is provided with a conical connection port, and the top is provided with a flexible glue conical connection portion; and the conical connection portion at the top of the box cover matches the conical connection port, so that the upper and lower layers of planting boxes can be connected in a stacked and nested manner. A condensed water collector communicating with the heat dissipation passages is arranged between the box cover and the box body; and a side surface of the box body is provided with an observation window. Through this window, the growth of a plant can be observed. The top of the box body is provided with an L-shaped sliding chute; and the illumination cavity is fixed at the top of the planting box body through the L-shaped sliding chute. A single planting box can be put into use for planting after being powered on, or the planting boxes can be stacked to form a planting group to realize factory planting.

The basic structure of the present embodiment 2 is generally the same as Embodiment 1, except that referring to FIG. 11, the planting box body 3 of the present embodiment is of the water trough type. That is, the planting box body 3 is internally provided with a recess to be used as a water trough.

### Embodiment 3

Referring to FIG. 12, the present embodiment is applied to the field of plant factories. An erection-free planting case is provided; a planting box body is hollowed, and is applicable to tissue culture. The planting case includes at least one planting box. Each planting box is provided with a planting box body 3 and a box cover; a cavity, in which a light source module and a heat dissipation module are disposed, is formed inside the box cover; the light source module includes a plurality of lamp tubes detachably arranged in an illumination cavity in parallel; the heat dissipation module includes heat dissipation passages arranged between the lamp tubes, heat dissipation fans and heat dissipation fins; the heat dissipation passages are respectively connected to the heat dissipation fins and communicate to the outside through a heat dissipation passage inlet and a heat dissipation passage outlet on a cavity wall; a coolant flows in the heat dissipation passages; the coolant enters a heat dissipation cavity 14 via the heat dissipation passage inlet, then absorbs heat in the cavity, and is discharged from the heat dissipation outlet; the heat dissipation fins are uniformly arranged between two lamp tubes and are perpendicular to the direction of the lamp tubes; and the heat dissipation fans are arranged among the heat dissipation fins.

The bottom of the box body is provided with a conical connection port, and the top is provided with a flexible glue conical connection portion; and the conical connection portion at the top of the box cover matches the conical connection port, so that the upper and lower layers of planting boxes can be connected in a stacked and nested manner. A condensed water collector communicating with the heat dissipation passages is arranged between the box cover and the box body 3; and a side surface of the box body is provided with an observation window. Through this window, the growth of a plant can be observed. The top of the box body is provided with an L-shaped sliding chute; and the illumination cavity is fixed at the top of the planting box body through the L-shaped sliding chute. A single planting box can be put into use for planting after being powered on, or the planting boxes can be stacked to form a planting group to realize factory planting.

The basic structure of the present embodiment 3 is generally the same as Embodiment 1, except that referring to FIG. 12, the planting box body 3 of the present embodiment is hollowed. That is, the planting box body 3 is internally provided with a hollowed concave groove.

### Embodiment 4

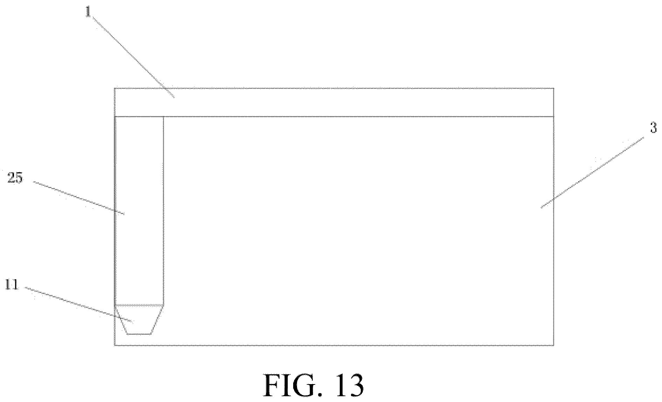

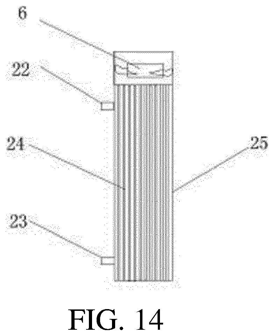

Referring to FIG. 13 and FIG. 14, the present embodiment 4 differs from other embodiments in that in the present embodiment, a heat dissipation module 25 is arranged on a box body 3. The heat dissipation module 25 is arranged on a side surface of an inner wall of the box body, and includes a heat dissipation main body; the top of the heat dissipation main body is provided with a heat dissipation fan 6; side surfaces of the heat dissipation main body are respectively provided with a cooling fluid inlet 22 and a cooling fluid outlet 23; the heat dissipation main body further includes a plurality of heat dissipation fins 24; the heat dissipation fins are located at an air outlet of the fan; and the bottom of the heat dissipation main body is further connected with a condensed water collector 11.

The present invention has the following beneficial effects: compared with a traditional plant factory, the present invention designs a closed system, which can realize watering-free and unattended functions for plants; and the front view surface and the rear view surface of the planting box body are provided with the observation windows to facilitate observation of the growth of the plant. The present invention has various types of box bodies. Different box bodies can be matched according to different planting requirements; and a box body stacking manner implements the erection-free planting case and reduces the cost for plant factory construction and planting equipment. The CO₂ supplementation system of the present invention shortens the growth cycle of the plant, so that the yield is effectively increased, and the income is improved; a cooling system makes the plant growth temperature stable and controllable, so that the cost for air conditioning equipment and power consumption caused by later operation are reduced. By the arrangement of the condensed water device of the present invention, cyclic utilization of condensed water and water saving are achieved; the design of a light-proof planting box increases the light utilization rate; and the fully-closed system provides a fully-closed growth environment for the plant, which reduces generation of plant diseases and insect pests.

It should be noted that the relational terms herein such as first and second are used only to differentiate an entity or operation from another entity or operation, and do not require or imply any actual relationship or sequence between these entities or operations. Moreover, the terms "include," "comprise," and any variation thereof are intended to cover a non-exclusive inclusion. Therefore, in the context of a process, a method, an object, or a terminal device that includes a series of elements, the process, method, object, or device not only includes such elements, but also includes other elements not specified expressly, or may include inherent elements of the process, method, object, or terminal device. If there are no more restrictions, the elements defined by the sentence "including..." or "comprising..." do not exclude the existence of other elements in the process, method, article, or terminal device that includes the elements. In addition, in this text, "greater than", "less than", "exceeds" and the like are understood to not include this number; and "above", "below", "within" and the like are understood to include this number.

## Claims

1. An erection-free planting case, comprising at least one planting box, wherein each planting box is provided with a box body (3) and a box cover (1); a light source module (8) is arranged on the box cover; a heat dissipation module is arranged on the box cover; the box body is provided with a connection port (17); the box cover is provided with a connection portion (16); the connection portion of the box cover matches the connection port of the box body; and the light source module and the heat dissipation module are arranged in a cavity, the cavity is formed inside each box cover; and the light source module and the heat dissipation module are arranged in the cavity, the light source module comprises a plurality of lamp tubes arranged in the cavity and **characterized in that** the heat dissipation module comprises heat dissipation passages (7) arranged between the lamp tubes at intervals, heat dissipation fans (6) and heat dissipation fins (5); heat dissipation passages are respectively connected to the heat dissipation fins and communicate with the outside through heat dissipation passage inlet and outlet in a cavity wall; a coolant flows in the heat dissipation passages; the coolant enters through the inlet into the cavity via the heat dissipation passages, then absorbs heat in the cavity, and is discharged from the outlet.

2. The planting case according to claim 1, wherein two or more planting boxes are provided, the two or more planting boxes realize stacked connection by means of nesting the connection portion on the box cover of a lower layer of planting box into the connection port on the box body of an upper layer of planting box.

3. The planting case according to claim 1, wherein the plurality of lamp tubes are detachably arranged in the cavity in parallel; the heat dissipation fins are uniformly arranged between two lamp tubes, and are perpendicular to the direction of the two lamp tubes; and the heat dissipation fans are arranged among the heat dissipation fins.

4. The planting case according to claim 1, wherein a condensed water collector (11) is arranged between the box cover and the box body, and communicates with the heat dissipation passages.

5. The planting case according to claim 1, wherein the connection portion at the top of the box cover is a flexible glue conical connection plug (16), and the connection port at the bottom of the box body is a conical connection port (17).

6. The planting case according to claim 1, wherein a side surface of the box body is provided with an observation window (2), and the top of the box body is provided with an L-shaped sliding chute (18).

## Patentansprüche

1. Ein aufstellungsfreier Pflanzkasten, der mindestens einen Pflanzkasten umfasst, wobei jeder Pflanzkasten mit einem Kastenkörper (3) und einem Kastendeckel (1) versehen ist; ein Lichtquellenmodul (8) auf dem Kastendeckel angeordnet ist; ein Wärmeableitungsmodul auf dem Kastendeckel angeordnet ist; das Kastengehäuse mit einer Anschlussöffnung (17) versehen ist; der Kastendeckel mit einem Anschlussabschnitt (16) versehen ist; der Verbindungsabschnitt des Kastendeckels mit der Anschlussöffnung des Kastengehäuses übereinstimmt; und das Lichtquellenmodul und das Wärmeableitungsmodul in einem Hohlraum angeordnet sind, wobei der Hohlraum im Inneren jedes Kastendeckels ausgebildet ist; und das Lichtquellenmodul und das Wärmeableitungsmodul in dem Hohlraum angeordnet sind, wobei das Lichtquellenmodul eine Vielzahl von Lampenröhren umfasst, die in dem Hohlraum angeordnet sind, und **dadurch gekennzeichnet, dass** das Wärmeableitungsmodul Wärmeableitungsdurchgänge (7), die zwischen den Lampenröhren in Abständen angeordnet sind, Wärmeableitungslüfter (6) und Wärmeableitungsrippen (5) umfasst; Wärmeableitungskanäle sind jeweils mit den Wärmeableitungsrippen verbunden und stehen mit der Außenseite durch einen Wärmeableitungskanaleinlass und -auslass in einer Hohlraumwand in Verbindung; ein Kühlmittel fließt in den Wärmeableitungskanälen; das Kühlmittel tritt durch den Einlass über die Wärmeableitungskanäle in den Hohlraum ein, absorbiert dann Wärme in dem Hohlraum und wird durch den Auslass abgeleitet.

2. Pflanzkasten nach Anspruch 1, bei dem zwei oder mehr Pflanzkästen vorgesehen sind, wobei die zwei oder mehr Pflanzkästen eine gestapelte Verbindung realisieren, indem der Verbindungsabschnitt auf dem Kastendeckel einer unteren Schicht des Pflanzkastens in die Anschlussöffnung auf dem Kastengehäuse einer oberen Schicht des Pflanzkastens eingefügt wird.

3. Das Pflanzgehäuse gemäß Anspruch 1, wobei die mehreren Lampenrohre in dem Hohlraum parallel und abnehmbar angeordnet sind; die Wärmeabfuhrrippen gleichmäßig zwischen zwei Lampenrohren angeordnet sind und senkrecht zur Richtung der beiden Lampenrohre verlaufen; und die Wärmeabfuhrlüfter zwischen den Wärmeabfuhrrippen angeordnet sind.

4. Das Pflanzgehäuse gemäß Anspruch 1, wobei zwischen dem Kastendeckel und dem Kastengehäuse ein Kondenswasserkollektor (11) angeordnet ist, der mit den Wärmeabfuhrkanälen in Verbindung steht.

5. Das Pflanzgehäuse gemäß Anspruch 1, wobei der Verbindungsabschnitt an der Oberseite des Kastendeckels ein flexibler, konischer Klebestopfen (16) ist und die Anschlussöffnung an der Unterseite des Kastengehäuses eine konische Anschlussöffnung (17) ist.

6. Das Pflanzgehäuse gemäß Anspruch 1, wobei eine Seitenfläche des Kastengehäuses mit einem Beobachtungsfenster (2) versehen ist und die Oberseite des Kastengehäuses mit einer L-förmigen Gleitrutsche (18) versehen ist.

## Revendications

1. Une caisse de plantation sans construction, comprenant au moins une boîte de plantation, dans laquelle chaque boîte de plantation est munie d'un corps de boîte (3) et d'un couvercle de corps de boîte (1); un module de source de lumière (8) est agencé sur le couvercle de boite; un module de dissipation de la chaleur est agencé sur le couvercle de boîte ; le corps de boîte est muni d'un port de connexion (17); le couvercle de boîte est muni d'une partie de connexion (16); la partie de connexion du couvercle de boîte correspondant au port de connexion du corps de boîte ; et le module de source de lumière et le module de dissipation de la chaleur sont agencés dans une cavité, la cavité est formée à l'intérieur de chaque couvercle de boîte ; et le module de source de lumière et le module de dissipation de la chaleur sont agencés dans la cavité, le module de source de lumière comprend une pluralité de tubes de lampes agencée dans la cavité et **caractérisé en ce que** le module de dissipation de la chaleur comprend des passages de dissipation de la chaleur (7) agencés entre les tubes de lampes par intervalles, des ventilateurs de dissipation de la chaleur (6) et des ailettes de dissipation de la chaleur (5); les passages de dissipation de la chaleur sont respectivement connectés aux ailettes de dissipation de la chaleur et communiquent avec l'extérieur via une entrée et une sortie de passage de dissipation de la chaleur dans une paroi de la cavité; un liquide refroidissant s'écoule dans les passages de dissipation de la chaleur; le liquide refroidissant pénètre la cavité par l'entrée via les passages de dissipation de la chaleur, puis absorbe la chaleur de la cavité, et est évacué par la sortie.

2. Une caisse de plantation selon la revendication 1, dans laquelle deux boîtes de plantation ou plus sont fournies, les deux boîtes de plantation ou plus réalisent une connexion empilée par moyen d'emboîtement de la partie de connexion sur le couvercle de boite d'une couche inférieure de boîte de plantation dans le port de connexion du corps de boîte d'une couche supérieure de boite de plantation.

3. Une caisse de plantation selon la revendication 1, dans laquelle la pluralité de tubes de lampes sont agencées de façon détachable dans la cavité en parallèle ; les ailettes de dissipation de la chaleur sont agencées de façon uniforme entre deux tubes de lampes, et sont perpendiculaires au sens de deux tubes de lampes ; et les ventilateurs de dissipation de la chaleur sont agencés avec les ailettes de dissipation de la chaleur.

4. Une caisse de plantation selon la revendication 1, dans laquelle un collecteur d'eau de condensation (11) est agencé entre le couvercle de boîte et le corps de boîte, et communique avec les passages de dissipation de la chaleur.

5. Une caisse de plantation selon la revendication 1, dans laquelle la partie de connexion sur le dessus du couvercle de boîte est une fiche de connexion conique à colle flexible (16), et le port de connexion à la base du corps de boîte est un port de connexion conique (17).

6. Une caisse de plantation selon la revendication 1, dans laquelle une surface latérale du corps de boîte est munie d'une fenêtre d'observation (2), et le dessus du corps de boîte est muni d'une rampe de glissement en forme de L (18).
